(19) Europäisches Patentamt
European Patent Office
Office européen des brevets

(11) **EP 3 249 011 B1**

(12) **EUROPEAN PATENT SPECIFICATION**

(45) Date of publication and mention
of the grant of the patent:
**29.04.2020 Bulletin 2020/18**

(21) Application number: **16740190.0**

(22) Date of filing: **20.01.2016**

(51) Int Cl.:
*C08L 53/02* (2006.01)        *B32B 27/00* (2006.01)
*B65D 23/08* (2006.01)        *C08L 47/00* (2006.01)
*G09F 3/04* (2006.01)         *B32B 7/02* (2019.01)
*B32B 7/12* (2006.01)         *B32B 27/30* (2006.01)
*B32B 27/36* (2006.01)        *B65D 65/40* (2006.01)

(86) International application number:
**PCT/JP2016/051513**

(87) International publication number:
**WO 2016/117583 (28.07.2016 Gazette 2016/30)**

(54) **BLOCK COPOLYMER RESIN COMPOSITION, HEAT-SHRINKABLE MULTILAYER FILM, HEAT-SHRINKABLE LABEL, AND BEVERAGE CONTAINER**

BLOCKCOPOLYMERHARZZUSAMMENSETZUNG, WÄRMESCHRUMPFBARER MEHRSCHICHTFILM, WÄRMESCHRUMPFBARES ETIKETT UND GETRÄNKEBEHÄLTER

COMPOSITION DE RÉSINE COPOLYMÈRE SÉQUENCÉ, FILM MULTICOUCHE THERMORÉTRACTABLE, ÉTIQUETTE THERMORÉTRACTABLE, ET RÉCIPIENT POUR BOISSON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2015 JP 2015010087**

(43) Date of publication of application:
**29.11.2017 Bulletin 2017/48**

(73) Proprietor: **Denka Company Limited**
**Tokyo 103-8338 (JP)**

(72) Inventors:
• **YAMADA, Shinya**
  **Ichihara-shi**
  **Chiba 290-8588 (JP)**
• **YOSHIDA, Jun**
  **Ichihara-shi**
  **Chiba 290-8588 (JP)**
• **ITO, Katsumi**
  **Ichihara-shi**
  **Chiba 290-8588 (JP)**
• **UEKUSA, Shinya**
  **Ichihara-shi**
  **Chiba 290-8588 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**EP-A1- 2 336 242        JP-A- S52 115 855
JP-A- S52 115 855        JP-A- 2005 131 824
JP-A- 2005 131 824       JP-A- 2007 216 486
JP-A- 2007 216 486       JP-A- 2013 216 027
JP-A- 2013 216 027       JP-A- 2014 065 238
JP-A- 2014 065 238**

**Description**

TECHNICAL FIELD

The present invention relates to a resin composition, a heat-shrinkable multilayer film, a heat-shrinkable label and a beverage container.

BACKGROUND ART

Heat-shrinkable films made of polystyrene-based resins are widely used in the labels of PET bottle containers. Additionally, laminated films having polyester-based resins as the front and back layers and polystyrene-based resins as intermediate layers, and laminated films having adhesive layers interposed between such layers, have also been proposed.
Such technologies are described, for example, in the below-indicated patent documents. However, laminated films having interposed adhesive layers require steps for forming the adhesive layers and therefore can be costly, and the adhesive layers may not be able to follow the shrinkage of the films and may thus become separated. Meanwhile, laminated films that are not interposed by adhesive layers are able to obtain a certain level of interlayer adhesive strength due to the selection of specific resins, but the interlayer adhesive strength is still inadequate for use under practical conditions.
JP S52 115855 A describes a biaxially stretched heat-contracting film for food packaging based on styrene-butadiene block copolymers with good contraction and cold shock resistance properties, the styrene film containing (a) 70-90 wt.% of styrene-butadiene block copolymer (having a styrene content of 65-90 % and a butadiene content of 10-35%) and (b) 10-30 wt. % of styrene-butadiene block copolymer (having a styrene content of 20-50% and a butadiene content of 50-80%). EP2336242 defines mixtures, for adhesives, of conjugated diene - vinyl aromatic hydrocarbon copolymers which comprise 10 to 45 wt.% of a conjugated diene - vinyl aromatic hydrocarbon di-block copolymer, 10 to 45 wt.% of a conjugated diene - vinyl aromatic hydrocarbon tapered di-block copolymer and 10 to 80 wt.% of a conjugated diene - vinyl aromatic multi-block copolymer. It discloses in its par. [0080-82] several such S(E,B,I,P)S block copolymers whose average MW start around 20.000 (cf. claims 5-6) which are comprised in 10-80 wt.% of the whole transparent adhesive composition.

Patent Document 1: JP 2004-170715 A
Patent Document 2: JP 2005-131824 A
Patent Document 3: JP 2006-159903 A
Patent Document 4: JP 2008-207487 A
Patent Document 5: JP 2012-210717 A
Patent Document 6: JP 2013-199616 A

SUMMARY OF THE INVENTION

In view of the above-mentioned circumstances, the present invention addresses the problem of providing a block copolymer resin composition that has excellent adhesive performance with respect to polyester-based resins, and a heat-shrinkable multilayer film and a heat-shrinkable label using the resin composition.
To this end, the present invention provides the following:

1. A block copolymer resin composition comprising 85 to 99.5 parts by mass of a resin component A and 0.5 to 15 parts by mass of a resin component B; wherein the resin component A contains at least one type of vinyl aromatic hydrocarbon-conjugated diene block copolymer, and a mass ratio between the vinyl aromatic hydrocarbon and the conjugated diene is 80/20 to 65/35; and the resin component B is a vinyl aromatic hydrocarbon-conjugated diene block copolymer or a conjugated diene polymer of which a mass ratio between the vinyl aromatic hydrocarbon and the conjugated diene is 30/70 to 0/100, and the number-average molecular weight is 5,000 to 40,000; and wherein the at least one type of vinyl aromatic hydrocarbon-conjugated diene block copolymer in the resin component A has, on at least one end, a block comprising a vinyl aromatic hydrocarbon, and has a number-average molecular weight of 50,000 to 400,000, and a mass ratio between the vinyl aromatic hydrocarbon and the conjugated diene of 78/22 to 45/55. The block copolymer resin composition preferably further comprises a resin component C comprising at least one type of vinyl aromatic hydrocarbon-based polymer.
2. Additionally, the present invention provides a heat-shrinkable multilayer film having front and back layers comprising a polyester-based resin composition, and an inner layer provided between the front and back layers; wherein the inner layer has at least one layer containing the above-described block copolymer resin composition.

In the present invention, the layer containing the block copolymer resin composition preferably further comprises more than 0 parts by mass and no more than 10 parts by mass of a polyester-based resin composition. Additionally, the heat-shrinkable multilayer film is preferably produced by being stretched along at least one axis, and the inner layer preferably has a lamellar morphology. The interlayer adhesive strength for separation at a pulling speed of 500 mm/min in the direction of the stretching axis is preferably 0.8 N/15 mm or more.

3. Additionally, the present invention provides a heat-shrinkable label comprising the above-described heat-shrinkable multilayer film. Additionally, the present invention provides a beverage container having this heat-shrinkable label.

According to the present invention, it is possible to provide a block copolymer resin composition that has excellent adhesive performance with respect to polyester-based resins, and a heat-shrinkable multilayer film, a heat-shrinkable label and a beverage container using the resin composition.

MODES FOR CARRYING OUT THE INVENTION

<Block Copolymer Resin Composition>

The block copolymer resin composition comprises 85 to 99.5 parts by mass of a resin component A, as defined below, and 15 to 0.5 parts by mass of a resin component B, and preferably comprises 90 to 99 parts by mass of the resin component A and 10 to 1 parts by mass of the resin component B. If the mass ratio of the resin component A is less than 85 parts by mass, then the appearance of the film may be degraded by fish eyes during the molding process. On the other hand, if the mass ratio of the resin component A exceeds 99.5 mass%, then interlayer adhesive strength cannot be obtained.

(Resin Component A)

The resin component A (hereinafter referred to also as "component A") is a resin composition containing at least one type of vinyl aromatic hydrocarbon-conjugated diene block copolymer a (hereinafter referred to also as "block copolymer a"), In one embodiment, the resin component A is a block copolymer containing at least one vinyl aromatic hydrocarbon-conjugated diene block copolymer, wherein the mass ratio between the vinyl aromatic hydrocarbon and the conjugated diene is 80/20 to 65/35.

Of the monomer units constituting the vinyl aromatic hydrocarbon-conjugated diene block copolymer a, examples of the vinyl aromatic hydrocarbon include styrene, o-methylstyrene, p-methylstyrene p-tert-butylstyrene, 2,4-dimethylstyrene, 2,5-dimethylstyrene, $\alpha$-methylstyrene, vinylnaphthalene, vinylanthracene and the like, among which styrene is particularly common.

Of the monomer units constituting the vinyl aromatic hydrocarbon-conjugated diene block copolymer a, examples of the conjugated diene include 1,3-butadiene, 2-methyl-1,3-butadiene (isoprene), 2,3-dimethyl-1,3-butadiene, 1,3-pentadiene, 1,3-hexadiene and the like, among which 1,3-butadiene is particularly common.

The vinyl aromatic hydrocarbon-conjugated diene block copolymer a has, as a constituent thereof, on at least one end, a block comprising a vinyl aromatic hydrocarbon, and has a number-average molecular weight of 50,000 to 400,000, and a mass ratio between the vinyl aromatic hydrocarbon and the conjugated diene of 78/22 to 45/55. It is sufficient for the block copolymer a to have a block comprising a vinyl aromatic hydrocarbon on at least one end, and the structures of blocks adjoining therewith is not particularly limited. If one end is not a block comprising a vinyl aromatic hydrocarbon, the transparency of the film will be reduced.

The mass ratio between the vinyl aromatic hydrocarbon and the conjugated diene in the block copolymer a is 78/22 to 45/55, preferably 78/22 to 55/45. If the mass ratio of the vinyl aromatic hydrocarbon is less than 50 parts by mass, the appearance of the film will be degraded by fish eyes during the molding process. On the other hand, if the mass ratio of the vinyl aromatic hydrocarbon exceeds 22 mass%, there is a tendency for the interlayer adhesive strength to be reduced.

The number-average molecular weight of the block copolymer a is 50,000 to 400,000, preferably 60,000 to 300,000. If less than 50,000, the thermal stability of the block copolymer may be reduced, and if more than 400,000, the moldability may be reduced.

The resin component A contains at least one type of the above-mentioned block copolymer a. The resin component A may also contain other vinyl aromatic hydrocarbon-conjugated diene block copolymers. Additionally, the resin component A preferably comprises at least one type of the block copolymer a. The mass ratio between the vinyl aromatic hydrocarbon and the conjugated diene in the resin component A is 80/20 to 65/35, preferably 78/22 to 70/30. If the mass ratio of the vinyl aromatic hydrocarbon is less than 65 parts by mass, then the stiffness (rigidity) of the film becomes worse. Meanwhile, if the mass ratio of the vinyl aromatic hydrocarbon exceeds 80 mass%, interlayer adhesive strength cannot be obtained.

(Resin Component B)

The resin component B (hereinafter also referred to as "component B") is a vinyl aromatic hydrocarbon-conjugated diene block copolymer or a conjugated diene polymer. If the resin component B is a vinyl aromatic hydrocarbon-conjugated diene block copolymer, the mass ratio between the vinyl aromatic hydrocarbon and the conjugated diene should be 30/70 to 0/100, preferably 20/80 to 0/100, and more preferably 10/90 to 0/100. If the mass ratio of the vinyl aromatic hydrocarbon exceeds 30 mass%, the interlayer adhesive strength tends to be reduced. The monomer units constituting the resin component B are the same as those constituting the block copolymer a, and the description thereof will be omitted. If the resin component B does not contain a vinyl aromatic hydrocarbon, it will not be a copolymer but rather a conjugated diene polymer, in which case polybutadiene is particularly preferred.

The number-average molecular weight of the resin component B is 5,000 to 40,000, preferably 5,000 to 30,000. If the number-average molecular weight is less than 5,000, then the interlayer adhesive strength may be reduced, and if more than 40,000, then the transparency of the film may be reduced. The number-average molecular weight of the block copolymer in the present invention was determined in accordance with a conventional method using a gel permeation chromatograph (hereinafter abbreviated to GCP).

The GPC was used to take measurements using the following method.

| | |
|---|---|
| Equipment name: | Toso HLC-8220GPC |
| Columns used: | Showa Denko Shodex GPCKF-404, four in series |
| Column temperature: | 40 °C |
| Detection method: | UV spectroscopy (254 nm) |
| Mobile phase: | Tetrahydrofuran |
| Sample concentration: | 2 wt% |
| Calibration line: | Standard polystyrene (Polymer Laboratories) |

(Methods for Producing Resin Components A and B)

The resin component A can be produced by polymerizing vinyl aromatic hydrocarbon monomers and conjugated diene monomers, using an organic lithium compound as an initiator, in an organic solvent, to obtain at least one type of the block copolymer a. When two or more types of the block copolymer a are included, it is possible to use, for example, a method in which an organic lithium compound, which is a polymerization initiator, or water or alcohol, which is a polymerization terminator, is added during polymerization, a method in which separately polymerized block copolymers a are blended in a solution, or a method in which separately produced and pelletized block copolymers a are melted and re-pelletized in an extruder. As an organic solvent, it is possible to use an aliphatic hydrocarbon such as butane, pentane, hexane, isopentane, heptane, octane or iso-octane, an alicyclic hydrocarbon such as cyclopentane, methylcyclopentane, cyclohexane, methylcyclohexane or ethylcyclohexane, or an aromatic hydrocarbon such as ethylbenzene or xylene. The same methods as those mentioned above can be used for the case in which the resin component B is a vinyl aromatic hydrocarbon-conjugated diene block copolymer. If the resin component B is a conjugated diene polymer, it is possible to use a polymerization method other than living anionic polymerization, such as coordination polymerization.

Organic lithium compounds are compounds in which one or more lithium atoms are bonded to the molecule, and may, for example, be monofunctional organic lithium compounds such as ethyllithium, n-propyllithium, isopropyllithium, n-butyllithium, sec-butyllithium and tert-butyllithium, or polyfunctional organic lithium compounds such as hexamethylene dilithium, butadienyl dilithium and isoprenyl dilithium.

As the vinyl aromatic hydrocarbon monomers and conjugated diene monomers, those described above may be used, and one or two or more types of each may be selected and used in polymerization. Additionally, in living anionic polymerization using the above-mentioned organic lithium compounds as initiators, approximately all of the vinyl aromatic hydrocarbon monomers and conjugated diene monomers that are supplied for the polymerization reaction are converted to polymers.

The molecular weights of the resin component A and the resin component B can be controlled by the amount of the polymerization initiator that is added with respect to the total amount of monomers added.

The resin component A and the resin component B obtained in this manner are deactivated by adding a sufficient quantity of a polymerization terminator such as water, alcohol, an organic acid, an inorganic acid, or a phenol-based compound, in an amount sufficient to deactivate the active terminals. Since the stoichiometric deactivation amount of the polymerization-active terminals is proportional to the stoichiometric amount of the polymerization terminator, it is possible to use a production method wherein only some of the polymerization-active terminals are deactivated during polymerization, and subsequently, the raw material monomer is further added so as to resume polymerization, thereby allowing the block copolymer constituting the resin component A, and the resin component B, which is a block copolymer or a conjugated diene polymer, to be produced simultaneously. The number of deactivations is not particularly limited as long as not all of the polymerization-active terminals are deactivated. However, all of the active terminals must be deactivated at the time of completion of polymerization.

The method for recovering the copolymer from the obtained block copolymer solution may be any method, such as a method of precipitation in a poor solvent such as methanol or the like, a method of precipitation by evaporation of the solvent by means of a heated roller or the like (drum dryer method), a method of concentrating the solution by means of a concentrator and then removing the solvent by means of a vent-type extruder, or a method of dispersing the solution in water and blowing in steam so as to heat and remove the solvent, and recovering the copolymer (steam stripping method).

(Resin Component C)

The block copolymer resin composition preferably further comprises a resin component C (hereinafter referred to also as "component C") comprising at least one type of vinyl aromatic hydrocarbon-based polymer. The stiffness (rigidity) of the film may be improved by including a resin component C.

The resin component C may be a polystyrene-based resin such as a general-purpose polystyrene (GPPS), a high-impact polystyrene (HIPS), a methyl methacrylate-styrene copolymer (MS), a methyl methacrylate-styrene-butadiene copolymer (MBS), an n-butyl acrylate-styrene copolymer, an n-butyl acrylate-methyl methacrylate-styrene copolymer, or an n-butyl acrylate-methyl methacrylate-styrene-butadiene copolymer.

The amount of the vinyl aromatic hydrocarbon-based resin C should preferably be more than 0 parts by mass and no more than 15 parts by mass with respect to 100 parts by mass of the block copolymer resin composition.

(Other Additives)

The block copolymer resin composition may be mixed with various additives, as needed, within a range not inhibiting the effects of the present invention. Examples of additives include various types of stabilizers, processing aids, weather resistance improving agents, softeners, plasticizers, anti-static agents, anti-fogging agents, mineral oils, fillers, pigments, dyes, flame retardants, lubricants and the like.

Examples of stabilizers include phenol-based antioxidants such as 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate and 2,6-di-tert-butyl-4-methylphenol, and phosphorus-based antioxidants such as tris-nonylphenyl phosphite and tris(2,4-di-tert-butylphenyl) phosphite. The processing aids, weather resistance improving agents, softeners, plasticizers, anti-static agents, anti-fogging agents, mineral oils, fillers, pigments, flame retardants and the like may be of common, generally known types. Additionally, the lubricant may be dimethylpolysiloxane, methylphenylpolysiloxane, a fatty acid, a glycerol fatty acid ester, a diglycerol di-fatty acid ester, a fatty acid amide, a fatty acid bis-amide, a hydrocarbon-based wax or the like.

(Method for Producing Block Copolymer Resin Composition)

The block copolymer resin composition is obtained by mixing the resin component A with the resin component B. Although the mixing method is not particularly defined, the method may, for example, be dry blending with a Henschel mixer, a ribbon blender, a V blender or the like, and may further include melting and pelletizing in an extruder. Alternatively, they may be added at the time of production of each polymer, in a stage before polymerization initiation, during the polymerization reaction, or during post-processing of the polymer. When adding the resin component C or another additive as needed, these additives may, for example, be further added, at predetermined ratios, to the resin component A and the resin component B, and mixed by a mixing method similar to those described above.

<Heat-Shrinkable Multilayer Film>

The heat-shrinkable multilayer film according to the present invention has front and back layers comprising a polyester-based resin composition, and an inner layer provided between the front and back layers.

(Front and Back Layers)

The polyester-based resin used in the front and back layers is a polycondensate mainly composed of a polyhydric carboxylic acid component and a polyhydric alcohol component, examples of the polyhydric carboxylic acid component being terephthalic acid, isophthalic acid, succinic acid and glutaric acid. One or two or more of these polyhydric carboxylic acid components may be used. Additionally, examples of the polyhydric alcohol component include ethylene glycol, 1,2-propylene glycol, 1,4-butanediol, neopentyl glycol, diethylene glycol, polyethylene glycol, tetramethylene glycol and 1,4-cyclohexane dimethanol. One or two or more of these polyhydric alcohol components may be used.

A polycondensate preferably comprising terephthalic acid as the polyhydric polycarboxylic acid and preferably comprising ethylene glycol, diethylene glycol or 1,4-cyclohexane dimethanol as the polyhydric alcohol component may be favorably used.

Examples of commercially available polyester-based resins include "Eastar Copolyester GN001" manufactured by Eastman Chemicals and "SKYGREEN S2008" manufactured by SK Chemicals. The polyester-based resin may be used as a single type, or as a blend of two or more types. For example, if the label is required to be heat-resistant, then a polycondensate containing neopentyl glycol as a diol component may be blended. Additionally, it is possible to blend in used PET food containers or PET bottles that have been processed into flake form, with a view to reusing resources.

When producing the film, these polyester-based resins may be mixed with various types of additives such as lubricants, stabilizers, anti-blocking agents and nucleating agents, as needed, within a range not inhibiting the purpose of the present invention.

(Inner Layer)

The inner layer has at least one layer including the above-mentioned block copolymer resin composition. There may be two or more layers containing the block copolymer resin composition. The layer containing the block copolymer resin composition may be mixed with the above-mentioned polyester-based resin. When mixing a polyester-based resin, the amount should preferably be 10 parts by mass or less with respect to 100 parts by mass of the block copolymer resin composition. Additionally, a recycled material that is generated when preparing the laminated film of the present application may also be mixed.

The above-mentioned block copolymer resin composition has excellent adhesive performance with respect to polyester-based resins. Thus, even when an inner layer is formed using only layers containing the block copolymer resin composition without providing any adhesive layers, it is possible to obtain a heat-shrinkable multilayer film that has excellent interlayer adhesive strength with the front and back layers comprising polyester-based resin compositions. In other words, even when forming a heat-shrinkable multilayer film in which an inner layer formed from the block copolymer resin composition is directly laminated with the front and back layers formed from polyester-based resins, it is possible to obtain a heat-shrinkable multilayer film that has good interlayer adhesive strength between each layer. In one embodiment, it is possible to form a heat-shrinkable laminated film that is a three-layered laminated sheet including, as an inner layer, the above-mentioned block copolymer resin composition containing two or more block copolymers having specific structures and compositions at a predetermined mass ratio, and as the front and back layers, a polyester-based resin, wherein the film is stretched along at least one axis, and has an interlayer adhesive strength of at least 0.8 N/15 mm.

As layers other than the layer comprising the block copolymer resin composition, the inner layer may include one or two or more layers mainly composed of other block copolymer compositions produced by conventional methods. In this case, a layer containing a block copolymer resin composition may be used as an adhesive layer between a layer mainly composed of another block copolymer composition produced by a conventional method and the front and back layers comprising a polyester-based resin composition. When using a layer containing a block copolymer resin composition as an adhesive layer, a single resin may be used, or a mixture with other resins may be used. Examples of resins that may be mixed include styrene-based elastomers, polyester-based elastomers, or modifications thereof. In this case, the laminated structure may be a structure, for example, wherein the layers adjacent to the front and back layers are layers containing a block copolymer resin composition, and having, as an intermediate layer, a layer comprising another block copolymer composition produced by a conventional method. The other block copolymer composition produced by a conventional method may be a generally known vinyl aromatic hydrocarbon-conjugated diene block copolymer such as, for example, "Clearen 631 M" manufactured by Denka Co., Ltd., or the like.

The layer ratio of the heat-shrinkable multilayer film is preferably such that the thickness of the inner layer is at least 50% and at most 90%, more preferably at least 60% and at most 80%, of the overall thickness.

(Production Method of Heat-shrinkable Multilayer Film)

The heat-shrinkable multilayer film can be obtained by using the above-mentioned block copolymer resin composition as an inner layer such as an intermediate layer or an adhesive layer, and a polyester-based resin as the front and back layers, melting each layer in an extruder and using a feed block method, a multi-manifold method or the like to form a sheet that is laminated with three layers of two types that are not interposed by adhesive layers, or a sheet that is laminated with five layers of three types including adhesive layers, and then stretching the film along at least one axis. For example, it is preferable to stretch the laminated sheet along one axis, two axes or multiple axes. Examples of uniaxial stretching include a method of stretching an extruded sheet in a direction (TD: transverse direction) orthogonal to the extrusion direction (MD: machine direction) using tenters, a method of stretching an extruded tubular film in the circumferential direction, a method of stretching an extruded sheet in the MD direction by means of rollers, and the like. Examples of biaxial stretching include a method of stretching an extruded sheet in the MD direction using rollers, followed by stretching in the TD direction using tenters or the like, a method of simultaneously or separately stretching an extruded tubular film in the extrusion direction and the circumferential direction, and the like.

When producing a laminated sheet using a T-die type sheet extruder, the temperature of the extruder should preferably be 180 to 260 °C. If the temperature is less than 180 °C, the plasticization of the polyester resin is inadequate. If the temperature exceeds 260 °C, fish eyes are enhanced by thermal degradation of the block copolymer resin composition, and the appearance tends to become worse.

When producing a heat-shrinkable multilayer film, the stretching temperature should preferably be 80 to 120 °C. If the stretching temperature is less than 80 °C, there are cases in which the film ruptures during stretching. Meanwhile, if the stretching temperature exceeds 120 °C, there are cases in which good shrinking properties are not obtained in the film. Particularly preferred stretching temperatures, relative to the glass transition temperature (Tg) of the composition forming the film, are within the range of Tg + 5 °C to Tg + 20 °C. In the case of a multilayer film, a range of Tg + 5 °C to Tg + 20 °C relative to the Tg of the polymer composition of the layer having the lowest Tg is particularly preferred. The glass transition temperature (Tg) is determined from the temperature at the peak of the loss elastic modulus of the composition forming the film. While the stretch factor is not particularly limited, it should preferably be a factor of 1.5 to 7, more preferably a factor of 4.5 to 5.5. If less than a factor of 1.5, then the heat-shrinking properties are inadequate, and if greater than a factor of 7, then stretching becomes undesirably difficult.

The thickness of the heat-shrinkable multilayer film obtained by stretching is preferably 20 to 80 $\mu$m overall, and more preferably 30 to 60 $\mu$m.

When these heat-shrinkable multilayer films are used as heat-shrinkable labels, the heat shrinkage rate in the main stretching axis direction should preferably be at least 40% for a temperature of 80 °C and a treatment period of 10 seconds. If the heat shrinkage rate is less than 40%, then high temperatures are needed at the time of shrinkage, so the production efficiency of covered containers is reduced, and there is a risk of adversely affecting the covered article.

The morphology of the inner layer of the multilayer film is preferably lamellar (a layered structure). A rubber phase having a low styrene mass ratio, in rods, tends to have reduced interlayer adhesive strength. The morphology of the inner layer of the multilayer film can be confirmed by using a diamond knife to cut the film, thereby obtaining an ultrathin piece, dyeing this piece with osmium tetroxide, and observing the piece using a transmission electron microscope.

The interlayer adhesive strength of the multilayer film should be 0.8 N/15 mm or more in the main stretching axis direction. If less than 0.8 N, the layers may be separated during label cutting prior to attachment to a container, or the layers may be susceptible to peeling from a center sealing portion during attachment to a container by heat shrinkage, so it is not preferable. The interlayer adhesive strength may be determined from the load average when using, as a test piece, a multilayer film that has been cut in a rectangular form measuring 100 mm in the main stretching axis direction and 15 mm in a direction perpendicular to the main stretching axis direction, pre-peeling 50 mm from one end in the main stretching axis direction, clamping the piece in the chucks of a tensile tester so as to take a T-type adhesive strength measurement, and separating the film with an initial chuck spacing of 50 mm and a pulling speed of 500 mm/min.

The heat-shrinkable label of the present invention can be produced by a generally known method, and for example, can be produced by printing onto the heat-shrinkable multilayer film of the present application, then solvent-sealing with the main stretching axis direction aligned with the circumferential direction.

When the heat-shrinkable multilayer film is used as a heat-shrinkable label, there is no particular limitation on the container, but metal can containers (three-piece cans and two-piece cans, or lidded bottle cans, etc.) made of tin, TFS, aluminum or the like, glass containers, or containers made of polyethylene terephthalate (abbreviated as PET), polyethylene or polypropylene and the like are preferably used.

EXAMPLES

Herebelow, the present invention will be explained by presenting examples. However, the present invention should not be construed as being limited by these examples.

The block copolymers used in the examples and the comparative examples, aside from those produced by the methods indicated in the following reference examples, were commercially available products in some cases.

<Reference Example 1> Production of block copolymer (A-1)

(1) 500 kg of cyclohexane containing 150 ppm of tetrahydrofuran and 3800 mL of a cyclohexane solution containing 10 mass% of n-butyllithium, as a polymerization catalyst solution, were loaded into a reaction container, and maintained at 30 °C.

(2) 44 kg of styrene monomers were added thereto and the styrene monomers were polymerized by anionic polymerization.

(3) After the styrene monomers were entirely consumed, a total weight of 66 kg of styrene monomers and a total weight of 90 kg of butadiene were simultaneously added, and the reaction was allowed to continue.

(4) After the reaction ended, 450 g of water was added for deactivation to obtain a solution containing a block copolymer (A-1), after which the polymer solution was pre-concentrated, then devolatilized and extruded using a twin-screw extruder equipped with a pressure reduction vent, thereby obtaining the target pellet-shaped block copolymer composition (A-1).

<Reference Example 2> Production of block copolymer (A-2)

(1) 500 kg of cyclohexane containing 150 ppm of tetrahydrofuran and 1700 mL of a cyclohexane solution containing 10 mass% of n-butyllithium, as a polymerization catalyst solution, were loaded into a reaction container, and maintained at 30 °C.

(2) 60 kg of styrene monomers were added thereto and the styrene monomers were polymerized by anionic polymerization.

(3) After the styrene monomers were entirely consumed, a total weight of 96 kg of styrene monomers and a total weight of 44 kg of butadiene were simultaneously added, and the reaction was allowed to continue.

(4) After the reaction ended, 260 g of water were added for deactivation to obtain a solution containing a block copolymer (A-2), after which the polymer solution was pre-concentrated, then devolatilized and extruded using a twin-screw extruder equipped with a pressure reduction vent, thereby obtaining the target pellet-shaped block copolymer composition (A-2).

<Reference Example 3> Production of block copolymer (A-3)

(1) 500 kg of cyclohexane containing 150 ppm of tetrahydrofuran and 1600 mL of a cyclohexane solution containing 10 mass% of n-butyllithium, as a polymerization catalyst solution, were loaded into a reaction container, and maintained at 30 °C.

(2) 68 kg of styrene monomers were added thereto and the styrene monomers were polymerized by anionic polymerization.

(3) After the styrene monomers were entirely consumed, a total weight of 24 kg of butadiene was added in a single batch while maintaining the internal temperature of the reaction system at 50 °C, and the reaction was allowed to continue.

(4) After the butadiene was entirely consumed, a total weight of 102 kg of styrene monomers and a total weight of 6 kg of butadiene were simultaneously added, and the reaction was allowed to continue.

(5) After the reaction ended, 270 g of water were added for deactivation to obtain a solution containing a block copolymer (A-3), after which the polymer solution was pre-concentrated, then devolatilized and extruded using a twin-screw extruder equipped with a pressure reduction vent, thereby obtaining the target pellet-shaped block copolymer composition (A-3).

<Reference Example 4> Production of block copolymer (A-4)

(1) 500 kg of cyclohexane containing 150 ppm of tetrahydrofuran and 1110 mL of a cyclohexane solution containing 10 mass% of n-butyllithium, as a polymerization catalyst solution, were loaded into a reaction container, and maintained at 30 °C.

(2) 40 kg of styrene monomers were added thereto and the styrene monomers were polymerized by anionic polymerization.

(3) After the styrene monomers were entirely consumed, a total weight of 102 kg of styrene monomers and a total weight of 18 kg of butadiene were both added simultaneously at constant addition rates of respectively 153 kg/h and 27 kg/h while maintaining the internal temperature of the reaction system at 80 °C, and the state was maintained for 5 minutes even after the addition ended.

(4) After the styrene monomers and butadiene were entirely consumed, a total weight of 40 kg of styrene monomers were added while maintaining the internal temperature of the reaction system at 65 °C, and the reaction was allowed to continue.

(5) After the reaction ended, 160 g of water were added for deactivation to obtain a solution containing a block copolymer (A-4), after which the polymer solution was pre-concentrated, then devolatilized and extruded using a twin-screw extruder equipped with a pressure reduction vent, thereby obtaining the target pellet-shaped block copolymer composition (A-4).

<Reference Example 5> Production of block copolymer composition (A-5, B-1)

Rather than producing (A-5) and (B-1) separately, a composition was produced by a single polymerization operation due to the later addition of a catalyst.

(1) 500 kg of cyclohexane containing 150 ppm of tetrahydrofuran and 1200 mL of a cyclohexane solution containing 10 mass% of n-butyllithium, as a polymerization catalyst solution, were loaded into a reaction container, and maintained at 30 °C.

(2) 48 kg of styrene monomers were added thereto and the styrene monomers were polymerized by anionic polymerization.

(3) After the styrene monomers were entirely consumed, a total weight of 17 kg of butadiene was added in a single batch while maintaining the internal temperature of the reaction system at 50 °C, and the reaction was allowed to continue.

(4) After the butadiene was entirely consumed, a total weight of 71 kg of styrene monomers and a total weight of 4.6 kg of butadiene were simultaneously added, and the reaction was allowed to continue.

(5) After the styrene monomers and butadiene were entirely consumed, while maintaining the internal temperature of the reaction system at 70 °C, 1600 mL of a cyclohexane solution containing 10 mass% of n-butyllithium was loaded as a polymerization catalyst solution, and a total weight of 59.4 kg of butadiene was added, and the reaction was allowed to continue.

(6) After the reaction ended, 500 g of water were added for deactivation to obtain a solution containing 77.5 parts by mass of a block copolymer (A-5) and 22.5 parts by mass of a polybutadiene (B-1), after which the polymer solution was pre-concentrated, then devolatilized and extruded using a twin-screw extruder equipped with a pressure reduction vent, thereby obtaining the target pellet-shaped block copolymer composition (A-5, B-1) containing 77.5 parts by mass of the block copolymer (A-5) and 22.5 parts by mass of the polybutadiene (B-1).

<Reference Example 6> Production of block copolymer composition (A-6, B-2)

Rather than producing (A-6) and (B-2) separately, a composition was produced by a single polymerization operation due to the later addition of a catalyst.

(1) 500 kg of cyclohexane containing 150 ppm of tetrahydrofuran and 1200 mL of a cyclohexane solution containing 10 mass% of n-butyllithium, as a polymerization catalyst solution, were loaded into a reaction container, and maintained at 30 °C.

(2) 48 kg of styrene monomers were added thereto and the styrene monomers were polymerized by anionic polymerization.

(3) After the styrene monomers were entirely consumed, a total weight of 17 kg of butadiene was added in a single batch while maintaining the internal temperature of the reaction system at 50 °C, and the reaction was allowed to continue.

(4) After the butadiene was entirely consumed, a total weight of 71 kg of styrene monomers and a total weight of 4.6 kg of butadiene were simultaneously added, and the reaction was allowed to continue.

(5) After the styrene monomers and butadiene were entirely consumed, while maintaining the internal temperature of the reaction system at 80 °C, 1600 mL of a cyclohexane solution containing 10 mass% of n-butyllithium was loaded as a polymerization catalyst solution, and a total weight of 11.9 kg of styrene monomers and a total weight of 47.5 kg of butadiene were both simultaneously added at constant addition rates of respectively 29.8 kg/h and 118.7 kg/h, and the state was maintained for 5 minutes even after the addition ended.

(6) After the reaction ended, 500 g of water were added for deactivation to obtain a solution containing 77.5 parts by mass of a block copolymer (A-6) and 22.5 parts by mass of a block copolymer (B-2), after which the polymer solution was pre-concentrated, then devolatilized and extruded using a twin-screw extruder equipped with a pressure reduction vent, thereby obtaining the target pellet-shaped block copolymer composition (A-6, B-2) containing 77.5 parts by mass of the block copolymer (A-6) and 22.5 parts by mass of the block copolymer (B-2).

<Reference Example 7> Production of block copolymer composition (A-7, B-3)

Rather than producing (A-7) and (B-3) separately, a composition was produced by a single polymerization operation due to the later addition of a catalyst.

(1) 500 kg of cyclohexane containing 150 ppm of tetrahydrofuran and 1640 mL of a cyclohexane solution containing 10 mass% of n-butyllithium, as a polymerization catalyst solution, were loaded into a reaction container, and maintained at 30 °C.
(2) 59.8 kg of styrene monomers were added thereto and the styrene monomers were polymerized by anionic polymerization.
(3) After the styrene monomers were entirely consumed, a total weight of 21.2 kg of butadiene was added in a single batch while maintaining the internal temperature of the reaction system at 50 °C, and the reaction was allowed to continue.
(4) After the butadiene was entirely consumed, a total weight of 89.3 kg of styrene monomers and a total weight of 5.7 kg of butadiene were simultaneously added, and the reaction was allowed to continue.
(5) After the styrene monomers and butadiene were entirely consumed, while maintaining the internal temperature of the reaction system at 70 °C, after adding 22 g of water for deactivation, 1000 mL of a cyclohexane solution containing 10 mass% of n-butyllithium was loaded as a polymerization catalyst solution, and a total weight of 24.0 kg of butadiene was added and polymerized by anionic polymerization.
(6) After the reaction ended, 150 g of water were added for deactivation to obtain a solution containing 88 parts by mass of a block copolymer (A-7) and 12 parts by mass of a polybutadiene (B-3), after which the polymer solution was pre-concentrated, then devolatilized and extruded using a twin-screw extruder equipped with a pressure reduction vent, thereby obtaining the target pellet-shaped block copolymer composition (A-7, B-3) containing 88 parts by mass of the block copolymer (A-7) and 12 parts by mass of the polybutadiene (B-3).

<Reference Example 8> Production of block copolymer composition (A-3, B-3)

Rather than producing (A-3) and (B-3) separately, a composition was produced by a single polymerization operation due to the later addition of a catalyst.

(1) 500 kg of cyclohexane containing 150 ppm of tetrahydrofuran and 1720 mL of a cyclohexane solution containing 10 mass% of n-butyllithium, as a polymerization catalyst solution, were loaded into a reaction container, and maintained at 30 °C.
(2) 59.8 kg of styrene monomers were added thereto and the styrene monomers were polymerized by anionic polymerization.
(3) After the styrene monomers were entirely consumed, a total weight of 21.2 kg of butadiene was added in a single batch while maintaining the internal temperature of the reaction system at 50 °C, and the reaction was allowed to continue.
(4) After the butadiene was entirely consumed, a total weight of 89.3 kg of styrene monomers and a total weight of 5.7 kg of butadiene were simultaneously added, and the reaction was allowed to continue.
(5) After the styrene monomers and butadiene were entirely consumed, while maintaining the internal temperature of the reaction system at 70 °C, after adding 22 g of water for deactivation, 1000 mL of a cyclohexane solution containing 10 mass% of n-butyllithium was loaded as a polymerization catalyst solution, and a total weight of 24.0 kg of butadiene was added and polymerized by anionic polymerization.
(6) After the reaction ended, 150 g of water were added for deactivation to obtain a solution containing 88 parts by mass of the block copolymer (A-3) and 12 parts by mass of the polybutadiene (B-3), after which the polymer solution was pre-concentrated, then devolatilized and extruded using a twin-screw extruder equipped with a pressure reduction vent, thereby obtaining the target pellet-shaped block copolymer composition (A-3, B-3) containing 88 parts by mass of the block copolymer (A-3) and 12 parts by mass of the polybutadiene (B-3).

<Reference Example 9> Production of block copolymer (A-7)

(1) 500 kg of cyclohexane containing 150 ppm of tetrahydrofuran and 1500 mL of a cyclohexane solution containing 10 mass% of n-butyllithium, as a polymerization catalyst solution, were loaded into a reaction container, and maintained at 30 °C.

(2) 68 kg of styrene monomers were added thereto and the styrene monomers were polymerized by anionic polymerization.

(3) After the styrene monomers were entirely consumed, a total weight of 24 kg of butadiene was added in a single batch while maintaining the internal temperature of the reaction system at 50 °C, and the reaction was allowed to continue.

(4) After the butadiene was entirely consumed, a total weight of 102 kg of styrene monomers and a total weight of 6 kg of butadiene were added simultaneously, and the reaction was allowed to continue.

(5) After the reaction ended, 270 g of water were added for deactivation to obtain a solution containing the block copolymer (A-7), after which the polymer solution was pre-concentrated, then devolatilized and extruded using a twin-screw extruder equipped with a pressure reduction vent, thereby obtaining the target pellet-shaped block copolymer composition (A-7).

For component B-4, Kuraray LBR-307 (a liquid polybutadiene having a number-average molecular weight of approximately 8000) was used.

The number-average molecular weights of the above-described block copolymers and polybutadienes were measured, by a gel permeation chromatograph (GPC), using the following equipment and conditions. The analysis values thereof are shown in Table 1.

| Equipment name: | Toso "HLC-8220GPC" |
| Columns used: | Showa Denko, product name "Shodex GPCKF-404", four in series |
| Column temperature: | 40 °C |
| Detection method: | UV spectroscopy (254 nm) |
| Mobile phase: | Tetrahydrofuran |
| Sample concentration: | 2 mass% |
| Calibration line: | Standard polystyrene (Polymer Laboratories) |

[Table 1]

| | | A-1 | A-2 | A-3 | A-4 | A-5 | A-6 | A-7 | B-1 | B-2 | B-3 | B-4 |
|---|---|---|---|---|---|---|---|---|---|---|---|---|
| Resin Component | styrene | parts by mass | 55 | 78 | 85 | 91 | 77 | 79 | 85 | 0 | 20 | 0 | 0 |
| | butadiene | parts by mass | 45 | 22 | 15 | 9 | 23 | 21 | 15 | 100 | 80 | 100 | 100 |
| Number-average Molecular Weight | | $\times 10{,}000$ | 6.8 | 21.0 | 14.3 | 24.2 | 14.7 | 15.0 | 17.9 | 2.4 | 2.6 | 3.9 | 0.8 |

[Examples 1 to 9 and Comparative Examples 1 to 4]

<Production of Heat-shrinkable Multilayer Film>

(1) Resins of inner layer and front and back layers

Using the vinyl aromatic hydrocarbon-conjugated diene block copolymers shown in Table 1, Toyo Styrene "G100C" as a polybutadiene and a polystyrene-based resin, and Eastman Chemicals "Eastar Copolyester GN001" as a polyester resin, block copolymer resin compositions were prepared so as to have the blends (in parts by mass) shown in Table 2, and used as the resin for an inner layer. Additionally, a polyester-based resin composition was prepared so as to comprise 98 mass% of Eastman Chemicals "Eastar Copolyester GN001" as a polyester resin and 2 mass% of Sumika Color "Natural EPM-7Y029" as an anti-blocking agent, and used as the resin for front and back layers.

(2) Extrusion molding of laminated sheet

In a T-die type multilayer sheet extruder (T-die lip width 300 mm), a laminated sheet having a layer ratio of 17/66/17 and a sheet thickness of 0.25 mm was obtained by setting a 40-mm extruder for the front and back layers at 240 °C and a 65-mm extruder for the inner layer at 200 °C, and setting the dice temperature to 210 °C.

(3) Stretching of laminated sheet

The resulting laminated sheet was stretched by a factor of 5 in the TD direction at a temperature of 90 °C using a tenter-type transverse stretching machine, thereby obtaining a heat-shrinkable multilayer film having a thickness of 50 μm.

<Physical Evaluation of Heat-shrinkable Multilayer Film>

The following physical evaluations were performed on the heat-shrinkable multilayer films obtained in this way. The results are shown in Table 2.

(Heat Shrinkage Rate)

Testing pieces cut so as to have square shapes measuring 100 mm in the TD direction (main stretching axis direction) and 100 mm in the MD direction were immersed for 10 seconds in hot water having a temperature of 80 °C, and calculations were made using the following equation.

$$\text{Heat shrinkage rate} = \{(L1 - L2)/L1\} \times 100$$

where: L1 is the length (in the stretching direction) before immersion, and
L2 is the length (in the stretching direction) after shrinking due to immersion for 10 seconds in hot water having a temperature of 80 °C.

(Interlayer Adhesive Strength)

Heat-shrinkable multilayer films that were cut into rectangular shapes measuring 100 mm in the TD direction (main stretching axis direction) and 15 mm in the MD direction were used as test pieces, 50 mm were pre-peeled from one end in the TD direction, and the films were clamped in the chucks of an A&D Tensilon universal testing machine RTG-1210 so as to take T-type adhesive strength measurements in the TD direction. The films were then separated with an initial chuck spacing of 50 mm and at a pulling speed of 500 mm/min, and values were determined by the load average at chuck spacings from 70 mm to 130 mm. The average value for seven tests was recorded as the measurement value. Aside therefrom, the measurement conditions were in compliance with JIS K6854-3. Laminated films that were difficult to separate were forcibly separated by applying Diatex "Pyolan Cloth Masking Tape Y-09-GR" (SUS plate bonding strength: 12 N/25 mm) to the surface of the laminated film and peeling with great force. Laminated films that did not separate even when this was repeated five times were determined to be unpeelable. Examples in which the stretching of the front and back layers took precedence during separation were determined to have material damage.

(Tensile Elastic Modulus and Tensile Elongation)

Measurements were made using an A&D Tensilon universal testing machine (RTC-1210A) in compliance with JIS K6871. Heat-shrinkable multilayer films that were cut into rectangular shapes measuring 10 mm in the TD direction (main stretching axis direction) and 100 mm in the MD direction were used as test pieces to take measurements with an initial chuck spacing of 40 mm and a pulling speed of 200 mm/min. There are no problems for practical use as long as the tensile elastic modulus is 800 MPa. There are no problems for practical use as long as the tensile elongation is at least 250%.

(Morphology of Inner Layer of Laminated Film)

After embedding the films in an epoxy resin, the films were trimmed with a microtome in a direction perpendicular to the TD direction (main stretching axis direction), dyed with osmic acid, washed with water, dried, then sliced in a direction perpendicular to the TD direction (main stretching axis direction) to a thickness of 0.1 $\mu$m, and observed in a transmission electron microscope. The osmic acid dyeing was performed by means of steam dyeing using a 4% osmium tetroxide aqueous solution.

<Production of Heat-shrinkable Label>

The film obtained in Example 3 was slit and formed into a tube such that the TD direction (main stretching axis direction) was aligned with the circumferential direction, and the ends of the film were welded with tetrahydrofuran, thereby obtaining heat-shrinkable labels.

<Production of Film-covered Container>

The heat-shrinkable label of Example 3 or Comparative Example 1 was used to cover an aluminum bottle can (having a lid) of which the cylindrical portion had a diameter of 66 mm, and heated by immersion for 10 seconds in hot water having a temperature of 90 °C, thereby heat-shrinking the label and preparing a film-covered container. Interlayer separation from the welded portion was not observed in the attached label of Example 3, and the shrinkage finish was also good. Interlayer separation from the welded portion was observed in the attached label of Comparative Example 1.

[Table 2]

| | | | Examples | | | | | | | | | | Comparative Examples | | | |
|---|---|---|---|---|---|---|---|---|---|---|---|---|---|---|---|---|
| | | | 1 | 2 | 3 | 4 | 5 | 6 | 7 | 8 | 9 | 1 | 2 | 3 | 4 |
| Inner Layer Blend | Component A | type | A-1 | A-1 | A-1 | A-1 | A-2 | A-1 | A-1 | A-1 | A-1 | A-1 | A-2 | A-1 | A-2 |
| | | parts by mass | 33 | 33 | 33 | 33 | 95 | 10 | 33 | 33 | 33 | 33 | 100 | 30 | 45 |
| | | type | A-5 | A-3 | A-3 | A-3 | - | A-2 | A-7 | A-5 | A-5 | A-3 | - | A-3 | A-3 |
| | | parts by mass | 52 | 58 | 58 | 66 | - | 25 | 63 | 52 | 52 | 67 | - | 30 | 45 |
| | | type | - | A-5 | A-6 | - | - | A-3 | - | - | - | - | - | A-4 | - |
| | | parts by mass | - | 7 | 7 | - | - | 50 | - | - | - | - | - | 30 | - |
| | Component A conjugated diene content | mass% | 32 | 26 | 25 | 25 | 22 | 20 | 25 | 32 | 32 | 25 | 22 | 2 23 | 19 |
| | Component B | type | B-1 | B-1 | B-2 | B-3 | B-4 | B-3 | B-4 | B-1 | B-1 | - | - | B-3 | B-3 |
| | | parts by mass | 15 | 2 | 2 | 1 | 5 | 15 | 4 | 15 | 15 | - | - | 10 | 10 |
| | Polystyrene-based resin (Component C) | parts by mass | - | - | - | - | - | - | - | 15 | - | - | - | - | - |
| | Polyester-based resin composition | parts by mass | - | - | - | - | - | - | - | - | 10 | - | - | - | - |
| Layer Ratio (front layer/inner layer/back layer) | | % | 17/66/17 | 17/66/17 | 17/66/17 | 17/66/17 | 17/66/17 | 17/66/17 | 17/66/17 | 17/66/17 | 17/66/17 | 17/66/17 | 17/66/17 | 17/66/17 | 17/66/17 |
| Film Appearance | | | fair | good | good | good | good | fair | good | good | good | good | good | good | good |
| Inner Layer Morphology | | | lamellar | lamellar | lamellar | lamellar | lamellar | lamellar | lamellar | lamellar | lamellar | lamellar | lamellar | rod | rod |

(continued)

| | | | Examples | | | | | | | | | Comparative Examples | | | |
|---|---|---|---|---|---|---|---|---|---|---|---|---|---|---|---|
| | | | 1 | 2 | 3 | 4 | 5 | 6 | 7 | 8 | 9 | 1 | 2 | 3 | 4 |
| Physical values of Heat-shrinkable Multilayer Film | 80 °C heat shrinkage rate | % | 47 | 46 | 46 | 49 | 45 | 48 | 44 | 35 | 49 | 53 | 47 | 43 | 45 |
| | Interlayer adhesive strength | N/15 mm | unpeelable | material damage | 1.2 | 1.0 | 1.0 | 0.9 | 1.1 | 0.9 | 0.9 | 0.4 | 0.2 | 0.3 | 0.3 |
| | Tensile elastic modulus | Mpa | 800 | 860 | 870 | 900 | 930 | 950 | 820 | 1120 | 1050 | 970 | 1080 | 1050 | 1140 |
| | Tensile elongation | % | 290 | 300 | 330 | 400 | 370 | 400 | 310 | 200 | 220 | 400 | 370 | 400 | 380 |

INDUSTRIAL APPLICABILITY

The block copolymer resin composition of the present invention can be favorably used as a heat-shrinkable label, a heat-shrinkable cap seal, or a packaging film for packaging various types of containers.

**Claims**

1.  A block copolymer resin composition **characterized in that** the block copolymer resin composition comprises 85 to 99.5 parts by mass of a resin component A and 0.5 to 15 parts by mass of a resin component B; wherein:

    the resin component A contains at least one type of vinyl aromatic hydrocarbon-conjugated diene block copolymer, and a mass ratio between the vinyl aromatic hydrocarbon and the conjugated diene is 80/20 to 65/35;
    the resin component B is a vinyl aromatic hydrocarbon-conjugated diene block copolymer or a conjugated diene polymer of which a mass ratio between the vinyl aromatic hydrocarbon and the conjugated diene is 30/70 to 0/100, and the number-average molecular weight is 5,000 to 40,000;
    wherein the at least one type of vinyl aromatic hydrocarbon-conjugated diene block copolymer in the resin component A has, on at least one end, a block comprising a vinyl aromatic hydrocarbon, and has a number-average molecular weight of 50,000 to 400,000, and a mass ratio between the vinyl aromatic hydrocarbon and the conjugated diene is 78/22 to 45/55; and
    wherein the number-average molecular weight is determined using a gel permeation chromatograph.

2.  The block copolymer resin composition according to claim 1, further comprising a resin component C comprising at least one type of vinyl aromatic hydrocarbon-based polymer.

3.  A heat-shrinkable multilayer film having front and back layers comprising a polyester-based resin composition, and an inner layer provided between the front and back layers;
    wherein the inner layer has at least one layer containing the block copolymer resin composition according to any one of claims 1 or 2.

4.  The heat-shrinkable multilayer film according to claim 3, wherein the layer containing the block copolymer resin composition further comprises more than 0 parts by mass and no more than 10 parts by mass of a polyester-based resin composition.

5.  The heat-shrinkable multilayer film according to claim 3 or 4, wherein the inner layer has a lamellar morphology.

6.  The heat-shrinkable multilayer film according to any one of claims 3 to 5, wherein an interlayer adhesive strength for separation at a pulling speed of 500 mm/min in a stretching axis direction is 0.8 N/15 mm or more.

7.  A heat-shrinkable label comprising the heat-shrinkable multilayer film according to any one of claims 3 to 6.

8.  A beverage container having the heat-shrinkable label according to claim 7.

**Patentansprüche**

1.  Blockcopolymerharzzusammensetzung, **dadurch gekennzeichnet, dass** die Blockcopolymerharzzusammensetzung umfasst: 85 bis 99,5 Masseteile einer Harzkomponente A und 0,5 bis 15 Masseteile einer Harzkomponente B; wobei gilt:

    die Harzkomponente A enthält mindestens eine Art von vinylaromatischem Kohlenwasserstoff-konjugierten Dien-Blockcopolymer, und ein Masseverhältnis zwischen dem vinylaromatischen Kohlenwasserstoff und dem konjugierten Dien beträgt 80/20 bis 65/35;
    die Harzkomponente B ist ein vinylaromatischer Kohlenwasserstoff-konjugiertes Dien-Blockcopolymer oder ein konjugiertes Dienpolymer, von dem das Masseverhältnis zwischen dem vinylaromatischen Kohlenwasserstoff und dem konjugierten Dien 30/70 bis 0/100 beträgt und das zahlenmittlere Molekulargewicht 5.000 bis 40.000 beträgt;
    wobei die mindestens eine Art von vinylaromatischem Kohlenwasserstoff-konjugierten Dien-Blockcopolymer in der Harzkomponente A an mindestens einem Ende einen Block aufweist, der einen vinylaromatischen Kohlenwasserstoff umfasst, und ein zahlenmittleres Molekulargewicht von 50.000 bis 400.000 aufweist, und ein Masseverhältnis zwischen dem vinylaromatischen Kohlenwasserstoff und dem konjugierten Dien 78/22 bis 45/55 beträgt; und

wobei das zahlenmittlere Molekulargewicht bestimmt wird unter Verwendung eines Gelpermeationschromatographen.

2. Blockcopolymerharzzusammensetzung nach Anspruch 1, des Weiteren umfassend eine Harzkomponente C, umfassend mindestens eine Art von Polymer auf Basis eines vinylaromatischen Kohlenwasserstoffs.

3. Hitzeschrumpfbarer Mehrschichtfilm, welcher Vorder- und Rückseitenschichten aufweist, die eine polyesterbasierte Harzzusammensetzung umfassen, sowie eine zwischen den Vorder- und Rückseitenschichten angeordnete innere Schicht;

wobei die innere Schicht mindestens eine Schicht aufweist, die die Blockcopolymerharzzusammensetzung nach einem der Ansprüche 1 oder 2 enthält.

4. Hitzeschrumpfbarer Mehrschichtfilm nach Anspruch 3, wobei die Schicht, die die Blockcopolymerharzzusammensetzung enthält, des Weiteren umfasst: 0 Masseteile und nicht mehr als 10 Masseteile einer Harzzusammensetzung auf Polyesterbasis.

5. Hitzeschrumpfbarer Mehrschichtfilm nach Anspruch 3 oder 4, wobei die innere Schicht eine lamellare Morphologie aufweist.

6. Hitzeschrumpfbarer Mehrschichtfilm nach einem der Ansprüche 3 bis 5, wobei die Zwischenschichtklebefestigkeit zur Abtrennung bei einer Ziehgeschwindigkeit von 500 mm/min in der Richtung einer Verstreckungsachse 0,8 N/15 mm oder mehr beträgt.

7. Hitzeschrumpfbares Etikett, umfassend den hitzeschrumpfbaren Mehrschichtfilm nach einem der Ansprüche 3 bis 6.

8. Getränkebehälter mit einem hitzeschrumpfbaren Etikett nach Anspruch 7.

**Revendications**

1. Composition de résine de copolymère séquencé **caractérisée en ce que** la composition de résine de copolymère séquencé comprend 85 à 99,5 parties en masse d'un composant de résine A et 0,5 à 15 parties en masse d'un composant de résine B ; dans laquelle :

le composant de résine A contient au moins un type de copolymère séquencé de diène conjugué à un hydrocarbure aromatique vinylique et un rapport massique entre l'hydrocarbure aromatique vinylique et le diène conjugué est de 80/20 à 65/35 ;
le composant de résine B est un copolymère séquencé de diène conjugué à un hydrocarbure aromatique vinylique ou un polymère de diène conjugué dont le rapport massique entre l'hydrocarbure aromatique vinylique et le diène conjugué est de 30/70 à 0/100, et le poids moléculaire moyen en nombre est de 5 000 à 40 000 ;
dans lequel le au moins un type de copolymère séquencé de diène conjugué à un hydrocarbure aromatique vinylique dans le composant de résine A présente, à au moins une extrémité, un bloc comprenant un hydrocarbure aromatique vinylique et présente un poids moléculaire moyen en nombre de 50 000 à 400 000, et un rapport massique entre l'hydrocarbure aromatique vinylique et le diène conjugué est de 78/22 à 45/55 ; et
dans lequel le poids moléculaire moyen en nombre est déterminé en utilisant un chromatographe à perméation de gel.

2. Composition de résine de copolymère séquencé selon la revendication 1, comprenant en outre un composant de résine C comprenant au moins un type de polymère hydrocarboné aromatique vinylique.

3. Film multicouche thermorétractable présentant des couches avant et arrière comprenant une composition de résine à base de polyester et une couche intérieure prévue entre les couches avant et arrière ;
dans lequel la couche intérieure présente au moins une couche contenant la composition de résine de copolymère séquencé selon l'une quelconque des revendications 1 ou 2.

4. Film multicouche thermorétractable selon la revendication 3, dans lequel la couche contenant la composition de résine de copolymère séquencé comprend en outre plus de 0 partie en masse et pas plus de 10 parties en masse d'une composition de résine à base de polyester.

5. Film multicouche thermorétractable selon la revendication 3 ou 4, dans lequel la couche intérieure présente une morphologie lamellaire.

6. Film multicouche thermorétractable selon l'une quelconque des revendications 3 à 5, dans lequel une force adhésive inter-couche pour une séparation à une vitesse de traction de 500 mm/min dans une direction d'axe d'étirage est de 0,8 N/15 mm ou plus.

7. Etiquette thermorétractable comprenant le film multicouche thermorétractable selon l'une quelconque des revendications 3 à 6.

8. Récipient pour boisson présentant l'étiquette thermorétractable selon la revendication 7.

**EP 3 249 011 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S52115855 A
- EP 2336242 A
- JP 2004170715 A
- JP 2005131824 A
- JP 2006159903 A
- JP 2008207487 A
- JP 2012210717 A
- JP 2013199616 A